# EUROPÄISCHE PATENTSCHRIFT

(11) **EP 2 366 673 B1**
(45) Veröffentlichungstag und Bekanntmachung des Hinweises auf die Patenterteilung: **07.05.2014**
(21) Anmeldenummer: 10002478.5
(22) Anmeldetag: 10.03.2010
(51) Int. Cl.: C02F 3/30, C02F 11/12, C02F 3/28, C02F 101/16, C02F 11/04

(54) **Verfahren zur biologischen Reinigung von ammoniumhaltigem Abwasser**
Method for biological purification of wastewater containing ammonium
Procédé de nettoyage biologique d'eaux usées contenant de l'ammonium

(43) Veröffentlichungstag der Anmeldung: 21.09.2011
(73) Patentinhaber: Demon GmbH, 8737 Gommiswald (CH)
(72) Erfinder: Nyhuis, Geert, Dr.-Ing., 8737 Gommiswald (CH)
(74) Vertreter: Scheffler, Jörg

(56) Entgegenhaltungen:
- WO-A1-00/05176
- WO-A1-97/33839
- DATABASE WPI Week 200418 Thomson Scientific, London, GB; AN 2004-188442 XP002590674 -& KR 2003 084 199 A (DM PURETECH CO LTD) 1. November 2003 (2003-11-01)

## Beschreibung

Die Erfindung betrifft ein Verfahren zur biologischen Reinigung von ammoniumhaltigem, insbesondere zwischen 7 und 25 °C kaltem, Abwasser in einem Belüftungsbecken, in welchem das in dem Abwasser enthaltene Ammonium (NH₄) bei einer vorgegebenen Sauerstoffkonzentration zu elementarem Stickstoff (N₂) umgesetzt wird und ein bei der Umsetzung entstehender Überschussschlamm zumindest teilweise einer Schlammfaulung zugeführt wird, während welcher die organischen Inhaltsstoffe des Schlamms zu Gas umgewandelt werden, wobei der Schlamm anschließend einer Schlammentwässerung zugeführt wird und das vom Schlamm abgetrennte, hoch stickstoffhaltige, warme Schlammwasser, welches insbesondere eine Stickstoffkonzentration von 500 bis 2000 mg/l und eine Temperatur von etwa 25 bis 39 °C aufweist, anschließend einem deammonifizierenden Becken zugeführt wird, in welchem die im Schlammwasser enthaltenen Stickstoffverbindungen (NH₄, organischer Stickstoff) durch Deammonifikation in elementaren Stickstoff (N₂) umgewandelt werden.

Bei einem in der Praxis bereits durchgeführten Verfahren der eingangs genannten Art wird kommunales Abwasser mit mehr oder weniger großen Teilen von industriellen Abwässern in einer aus einem Vorklärbecken, einem Belüftungsbecken und einem Nachklärbecken bestehenden Anlage gereinigt. Das Abwasser, welches je nach Jahreszeit eine Temperatur von 7 bis 25 °C und eine Stickstoffkonzentration von etwa 30 bis 70 mg/l aufweist, wird nach einer ersten mechanischen Reinigung, welche aus einer Rechenanlage und einem Vorklärbecken besteht, in ein Belüftungsbecken eingeleitet.

In dem Belüftungsbecken findet die eigentliche biologische Reinigung des Abwassers statt. Hier werden die im Abwasser gebundenen Stickstoffverbindungen wie Ammonium (NH₄), Nitrit (NO₂) und Nitrat (NO₃) durch Nitrifikation/Denitrifikation zu elementarem Stickstoff (N₂) umgesetzt, welcher als harmloses Endprodukt in die Umgebungsluft ausgast. Bei der Nitrifikation wird Ammonium durch Sauerstoff über das Zwischenprodukt Nitrit zu Nitrat oxidiert. Bei der anschließenden Denitrifikation wird das Nitrat in einem ersten Reduktionsschritt zu Nitrit und in einem zweiten Reduktionsschritt zu Stickstoff reduziert.

Die biologische Nitrifikation/Denitrifikation hat den Nachteil eines hohen Sauerstoffbedarfs und damit hohen Energieverbrauchs. Zudem wird bei der Denitrifikation organischer Kohlenstoff verbraucht, was sich nachteilig auf den weiteren Reinigungsprozess und die Schlammeigenschaften auswirkt.

Nach der biologischen Reinigung des Abwassers in dem Belüftungsbecken wird das Abwasser-Schlamm-Gemisch in das Nachklärbecken der Anlage geleitet, in welchem das Wasser vom Schlamm getrennt wird, wobei das abgetrennte Wasser aus dem Nachklärbecken abgeführt und entsorgt wird und der Schlamm teilweise als Rückführschlamm in das Belüftungsbecken zurückgeführt und teilweise als Überschussschlamm einem Faulbehälter zugeführt wird. In dem Faulbehälter oder während des Transports zum Faulbehälter wird der Schlamm auf eine Temperatur von etwa 40 °C aufgeheizt. Während der Schlammfaulung werden die organischen Inhaltsstoffe des Überschussschlamms aus dem Nachklärbecken und des dem Abwasser im Vorklärbecken entzogenen Schlamms in Gas (Methan) umgewandelt. Der enthaltene Stickstoff verbleibt im Schlamm, in dem jetzt eine hohe Stickstoffkonzentration von typischerweise 500 bis 2000 mg/l vorliegt Dieser hoch stickstoffhaltige Schlamm wird nach der Schlammfaulung im Faulbehälter einer Einrichtung zur Schlammentwässerung, beispielsweise einer Zentrifuge, zugeführt. Die wässrige Phase enthält nach der Schlammentwässerung den Stickstoff und weist eine Temperatur von etwa 25 bis 39 °C auf. Das warme, hoch stickstoffhaltige Schlammwasser wird im Anschluss einem deammonifizierenden Becken zugeführt, während der vom Schlammwasser abgetrennte Schlamm entsorgt wird.

In dem deammonifizierenden Becken werden die im Schlammwasser enthaltenen Stickstoffverbindungen (NH₄, organischer Stickstoff) durch Deammonifikation in elementaren Stickstoff (N₂) umgewandelt, welcher in die Umgebungsluft ausgast. Der bei der Deammonifikation entstehende Überschussschlamm wird anschließend der Schlammbehandlung zugeführt.

Die Deammonifikation ist ein effizientes Verfahren zur biologischen Stickstoffelimination, insbesondere zur Reinigung von Abwässern mit hohen Ammoniumkonzentrationen. Bei der biologischen Deammonifikation mit suspendierter Biomasse sind zwei Bakteriengruppen beteiligt, einerseits die aerob Ammonium oxidierenden Bakterien (AOB), welche Ammonium zu Nitrit umsetzen, und andererseits die anaerob Ammonium oxidierenden und elementaren Stickstoff produzierenden Bakterien (ANAMMOX), insbesondere Planctomyceten, welche diesen Schritt mit Hilfe des zuvor produzierten Nitrits vollziehen.

Die aerob Ammonium oxidierenden Bakterien (AOB) produzieren bezogen auf den Stoffumsatz 10-mal mehr neue Bakterienmasse als die anaerob Ammonium oxidierenden Bakterien (ANAMMOX). Die Aufenthaltszeit des Schlamms im Schlammsystem muss also mindestens so lang sein, dass sich die langsamwüchsigen anaerob Ammonium oxidierenden Bakterien (ANAMMOX) anreichem können.

Gegenüber der Nitrifikation/Denitrifikation wird bei der Deammonifikation nur die Hälfte des Sauerstoffs benötigt bzw. der Energieverbrauch für die Stickstoffelimination halbiert. Die Deammonifikation ist ein autotropher Prozess, bei dem kein organischer Kohlenstoff benötigt wird. Damit wird der übrige Reinigungsprozess stabiler.

Verfahren zur einstufigen bzw. zweistufigen biologischen Deammonifikation sind bereits aus der WO 2007/033393 A1, der EP 0 327 184 B1 und der WO 00/05176 A1 bekannt.

Als nachteilig erweisen sich bei der Deammonifikation insbesondere die wesentlich längeren Generationszeiten der anaerob Ammonium oxidierenden Bakterien (ANAMMOX), welche um den Faktor 10 bis 15 länger als die der aerob Ammonium oxidierenden Bakterien (AOB) sind. Dadurch kann sich ein stabiles System nur dann ausbilden, wenn die Aufenthaltszeit des Schlamms bzw. der Bakterien im Becken ausreichend groß ist. Dies bedingt wiederum große Reaktionsvolumina und entsprechend ausgebildete Becken.

Weiterhin ist eine ausreichend hohe Abwassertemperatur (> 25 °C) Grundlage für das Wachstum der anaerob Ammonium oxidierenden Bakterien (ANAMMOX) im technischen Maßstab. Das Aufheizen des Abwassers ist energetisch jedoch sehr aufwendig, weshalb die beschriebenen Verfahren bei Abwässem mit niedrigen Temperaturen nicht wirtschaftlich einsetz- bzw. durchführbar sind.

Außerdem erweist sich die Anwesenheit von solchen Bakteriengruppen als nachteilig, welche das gebildete Nitrit unter aeroben Bedingungen in Nitrat umwandeln (NOB). Diese Gruppe Bakterien hat gegenüber den anaerob Ammonium oxidierenden Bakterien (ANAMMOX) um den Faktor 10 kürzere Generationszeiten.

Aus den genannten Gründen beschränkt sich die Anwendung der Deammonifikation auf warme Abwasserströme, welche gleichzeitig eine hohe Stickstoffkonzentration aufweisen. Die Anwendung der Deammonifikation bei kalten Abwässern mit niedrigen Stickstoffkonzentrationen würde sehr große Reaktionsvolumina bedingen, die wirtschaftlich nicht sinnvoll sind. Konventionelle nitrifizierende Anlagen benötigen bereits ein Beckenvolumen, das typischerweise ein Schlammalter von 15 bis 20 Tagen sicherstellen muss. Für die Anwendung der Deammonifikation müssten diese Beckenvolumina nochmals um den Faktor 10 bis 15 vergrößert werden.

Außerdem ist aus der EP 0 503 546 B1 ein Verfahren zur Reinigung von Abwasser durch Nitrifikation/Denitrifikation bekannt, bei welchem man in einem Vorlagebehälter eine stoffwechselaktive Nitrifikantenpopulation kultiviert, von der aus kontinuierlich oder in Abständen Biomasse in eine biologische Reinigungsstufe überführt wird, wobei man in den Vorlagebehälter einen rückbelasteten Stoffstrom mit hoher Stickstofffracht leitet.

Der Erfindung liegt die Aufgabe zugrunde, ein verbessertes und wirtschaftlich durchführbares Verfahren zur Reinigung von ammoniumhaltigem Abwasser, insbesondere von kaltem Abwasser mit einer Temperatur unter 25 °C, zur Verfügung zu stellen.

Diese Aufgabe wird erfindungsgemäß mit einem Verfahren gemäß den Merkmalen des Anspruchs 1 gelöst. Die weitere Ausgestaltung der Erfindung ist den Unteransprüchen zu entnehmen.

Erfindungsgemäß ist also ein Verfahren vorgesehen, bei welchem ein bei der Deammonifikation des Schlammwassers entstehender Überschussschlamm dem Belüftungsbecken zugeführt und im Belüftungsbecken eine niedrige Sauerstoffkonzentration von kleiner als 1,0 mg/l eingestellt wird, sodass das im Abwasser enthaltene Ammonium (NH₄) zunächst mittels aerob oxidierender Bakterien (AOB) zu Nitrit (NO₂) umgesetzt wird und anschließend mittels anaerob oxidierender Bakterien (ANAMMOX), insbesondere Planctomyceten, Ammonium (NH₄) und Nitrit (NO₂) in elementaren Stickstoff (N₂) umgesetzt werden, wobei der bei dieser Deammonifikation im Belüftungsbecken entstehende Überschussschlamm vor der Zuführung zur Schlammfaulung in eine schwere Schlammphase, welche mehrheitlich die anaerob Ammonium (NH₄) oxidierenden Bakterien (ANAMMOX) enthält, und in eine leichte Schlammphase separiert wird, wobei die schwere Schlammphase in das Belüftungsbecken zurückgeführt und die leichte Schlammphase als Überschussschlamm der Schlammfaulung zugeführt wird.

Durch das Einleiten des Überschussschlamms aus dem deammonifizierenden Becken in das Belüftungsbecken und die gleichzeitige Begrenzung der Sauerstoffkonzentration auf unter 1,0 mg/l wird erstmals eine Anwendung der Deammonifikation auch bei kommunalen und/oder industriellen Abwässern im Belüftungsbecken trotz der niedrigen Abwassertemperatur und der niedrigen Stickstoffkonzentration ermöglicht. Das deammonifizierende Becken wirkt bei dem erfindungsgemäßen Verfahren wie ein Aufzuchtbecken für die bei der Deammonifikation im Belüftungsbecken erforderlichen Bakterien, insbesondere der Planctomyceten. Hierdurch wird die Problematik der niedrigen Wachstumsgeschwindigkeiten in Folge der niedrigen Abwassertemperaturen im Belüftungsbecken gelöst. Weiterhin wird durch die Einstellung des niedrigen Sauerstoffniveaus im Belüftungsbecken eine Hemmung der Planctomyceten verhindert.

Weiterhin wird die Anwendung der Deammonifikation in dem Belüftungsbecken dadurch begünstigt, dass der bei der Deammonifikation entstehende Überschussschlamm aus dem Belüftungsbecken im Anschluss in eine schwere Schlammphase, welche mehrheitlich die anaerob Ammonium oxidierenden Bakterien enthält (ANAMMOX), und in eine leichte Schlammphase separiert wird und die schwere Phase in das Belüftungsbecken zurückgeführt wird.

Dadurch, dass die Planctomyceten nicht im Flockenverbund auftreten und eine höhere Dichte aufweisen, kann der Überschussschlamm in eine schwere und eine leichte Phase getrennt werden. Die Planctomyceten wachsen sehr dicht mit einer Dichte von ca. 10¹⁰ Bakterien/ml. Durch die Zuführung der leichten Phase in die Schlammfaulung und die Rückführung der schweren Phase in das Becken kann die langsamwüchsige Gruppe der anaerob Ammonium oxidierenden Bakterien (ANAMMOX) in dem Belüftungsbecken angereichert werden. Der Anteil der anaerob Ammonium oxidierenden Bakterien (ANAMMOX), welcher beispielsweise in einem Ein-Schlamm-System zur reinen Stickstoffelimination, z.B. zur Behandlung von Abwässern mit hohen Stickstoffkonzentrationen mit unspezifischem Überschussschlammabzug, weniger als 10 % der Biomasse ausmacht, kann durch das Separieren des Überschussschlamms bzw. die Rückführung der Planctomyceten in das Belüftungsbecken auf über 30 % angehoben werden. Hierdurch kann das Reaktionsvolumen des Beckens entsprechend verkleinert und die Prozessstabilität der Anlage gesteigert werden. Die Abwasserinhaltsstoffe, die schwerer als die Planctomyceten sind, müssen vor dem Belüftungsbecken getrennt werden, da sie sich anderenfalls ebenfalls im System anreichern würden. Eine derartige Abtrennung geschieht in einem Vorklärbecken oder in einem Absetzbecken, das aufgrund der hohen Absetzgeschwindigkeit der Planctomyceten klein dimensioniert werden kann. Die Anlage zur Reinigung des Abwassers kann als einstufige Ein-Becken-Anlage oder als Mehr-Becken-Anlage ausgeführt sein.

Die Temperatur des Abwassers, welche die Existenz bzw. das Wachstum der anaerob Ammonium oxidierenden Bakterien (ANAMMOX) beeinflusst, ist durch das erfindungsgemäße Verfahren nicht mehr von entscheidender Bedeutung, sodass die Deammonifikation auch bei Abwässern mit einer Temperatur von ca. 7 °C noch effektiv und prozesssicher angewendet werden kann.

Die Temperatur beeinflusst alle Bakterien mehr oder weniger in gleicher Weise (etwa eine Verdoppelung der Umsatzgeschwindigkeit je 10 °C Temperaturerhöhung). Allerdings würde bei konventioneller Deammonifikation in einer Ein-Becken-Anlage bei niedrigen Temperaturen ein so großes Beckenvolumen erforderlich werden, dass die Durchführung der Deammonifikation nicht mehr wirtschaftlich wäre.

Durch die Rückführung der schweren Phase des Überschussschlamms aus dem Belüftungsbecken und die gleichzeitige Zufuhr des Überschussschlamms aus dem deammonifizierenden Becken der Schlammbehandlung in das Belüftungsbecken wird eine Möglichkeit zur Verfügung gestellt, die Deammonifikation auch bei kalten Abwässern mit niedrigen Stickstoffkonzentrationen anzuwenden, ohne die Beckenvolumina vergrößern zu müssen. Gleichzeitig wird dadurch, dass für die Umsetzung der Stickstoffverbindungen des Abwassers bei der Deammonifikation kein organischer Kohlenstoff benötigt wird, ein Verfahren zur Verfügung gestellt, bei dem eine Stickstoffelimination, insbesondere eine Nitrat-Elimination (Denitrifikation) bei niedrigem Gehalt an organischem Kohlenstoff möglich wird. Weiterhin ergibt sich ein erhebliches Energieeinsparungspotential bei der Belüftung des Abwassers im Belüftungsbecken, da bei dem erfindungsgemäßen Verfahren eine Sauerstoffkonzentration von unter 1,0 mg/l eingestellt wird, währenddessen bei der konventionellen Nitrifikation/Denitrifikation in den herkömmlichen Anlagen eine Sauerstoffkonzentration von bis zu 3,0 mg/l zur Verfügung gestellt werden muss.

Durch die Rückführung der schweren Phase und die damit verbundene Anreicherung verschieben sich auch die Anteile der anaerob Ammonium oxidierenden Bakterien (ANAMMOX) zu den Nitrat bildenden Bakterien (NOB) zugunsten der anaerob Ammonium oxidierenden Bakterien (ANAMMOX). Hierdurch wird der Prozess von der Nitrifikation/Denitrifikation immer weiter zur Deammonifikation verschoben.

Nach der Deammonifikation des hoch stickstoffhaltigen Schlammwasser aus der Schlammbehandlung bzw. der Schlammfaulung wird dieses in eine wässrige Phase (schlarmmwasser) und eine Schlammphase (Überschussschlamm), beispielsweise durch Sedimentation, getrennt. Da die wässrige Phase noch Rückstände von Ammonium und Nitrit aufweist, erweist es sich als besonders umweltfreundlich, wenn das in dem deammonifizierenden Becken durch Deammonifikation gereinigte Schlammwasser (wässrige Phase) nach dem Abtrennen vom Schlamm ebenfalls dem Belüftungsbecken zugeführt wird.

Aus wirtschaftlichen Gesichtspunkten erweist es sich als besonders vorteilhaft, wenn der bei der Deammonifikation in dem deammonifizierenden Becken entstehende Überschussschlamm und das gereinigte Schlammwasser als Suspension dem Belüftungsbecken zugeführt werden. Hierdurch wird nur eine Leitung für die Zuführung der Suspension benötigt.

Die Anlage kann als Ein-Becken-Anlage oder als Mehr-Becken-Anlage ausgebildet sein. Bei einer Ausbildung als Mehr-Becken-Anlage ist in vorteilhafter Weise vorgesehen, dass das Abwasser nach der Deammonifikation im Belüftungsbecken einem Nachklärbecken zugeführt wird, wobei der sich im Nachklärbecken absetzende Schlamm teilweise als Rückführschlamm in das Belüftungsbecken und teilweise als Überschussschlamm der Schlammfaulung zugeführt wird.

Alternativ oder zusätzlich kann das Abwasser vor dem Einleiten in das Belüftungsbecken in einem Vorklärbecken gereinigt werden, wobei ein Vorklärschlamm zusammen mit dem Überschussschlamm aus dem Belüftungsbecken oder dem Nachklärbecken der Schlammfaulung zugeführt wird.

Eine besonders vorteilhafte Weiterbildung des vorliegenden Verfahrens wird auch dadurch geschaffen, dass das Separieren des aus der Deammonifikation des Abwassers in dem Belüftungsbecken resultierenden Überschussschlamms in eine schwere Schlammphase und eine leichte Schlammphase in einem Hydrozyklon durchgeführt wird. Durch einen Hydrozyklon, auch Fliehkraftabscheider genannt, lässt sich der Überschussschlamm besonders schnell und prozesssicher in eine schwere Phase, welche durch einen Unterlauf des Zyklons in das Becken zurückgeführt wird, und eine leichte Phase, welche durch den Oberlauf aus dem System abgeführt wird, trennen.

In einer alternativen Abwandlung des erfindungsgemäßen Verfahrens ist vorgesehen, dass das Separieren des aus der Deammonifikation des Abwassers in dem Belüftungsbecken resultierenden Überschussschlamms in eine schwere Schlammphase und eine leichte Schlammphase in einer Zentrifuge durchgeführt wird. Eine Zentrifuge separiert den Überschussschlamm unter Ausnutzung der Massenträgheit. Die schwere Schlammfraktion mit der höheren Dichte wandert aufgrund ihrer Trägheit nach außen und verdrängt die leichtere Schlammfraktion mit der geringeren Dichte in die Mitte der Zentrifuge.

Weiterhin ist es möglich, dass das Separieren des aus der Deammonifikation des Abwassers in dem Belüftungsbecken resultierenden Überschussschlamms in eine schwere Schlammphase und eine leichte Schlammphase durch Sedimentation erfolgt. Hierbei erfolgt die Trennung des Überschussschlamms in ein schwere und eine leichte Phase unter dem Einfluss der Schwerkraft.

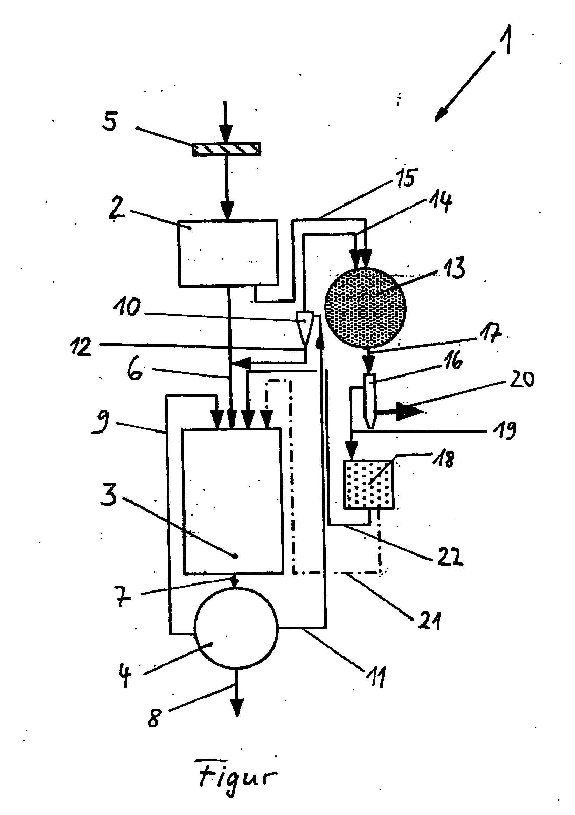

Die Erfindung lässt verschiedene Ausführungsformen zu. Zur weiteren Verdeutlichung wird das erfindungsgemäße Verfahren anhand der Zeichnung beschrieben.

Diese zeigt in der einzigen Figur eine Anlage 1 zur biologischen Reinigung von ammoniumhaltigem Abwasser in einer vereinfachten systematischen Darstellung. In der aus einem Vorklärbecken 2, einem Belüftungsbecken 3 und einem Nachklärbecken 4 bestehenden Anlage 1 wird kommunales Abwasser mit mehr oder weniger großen Teilen von industriellen Abwässern gereinigt. Das Abwasser, welches je nach Jahreszeit eine Temperatur von etwa 7 bis 25 °C und eine Stickstoffkonzentration von etwa 20 bis 100 mg/l aufweist, wird nach einer ersten mechanischen Reinigung, welche aus einer Rechenanlage 5 und dem Vorklärbecken 2 besteht, in ein Belüftungsbecken 3 eingeleitet (Pfeil 6).

In dem Belüftungsbecken 3 findet die eigentliche biologische Reinigung des Abwassers statt. Durch eine in der Figur nicht dargestellte Belüftungseinrichtung im Belüftungsbecken 3 wird in dem Abwasser eine Sauerstoffkonzentration von unter 1,0 mg/l eingestellt und die im Abwasser enthaltenen Stickstoffverbindungen werden zumindest teilweise durch Deammonifikation in elementaren Stickstoff (N₂) umgesetzt, welcher als harmloses Endprodukt in die Umgebungsluft ausgast.

Nach der biologischen Reinigung des Abwassers in dem Belüftungsbecken 3 wird das Abwasser-Schlamm-Gemisch dem Nachklärbecken 4 der Anlage 1 zugeführt (Pfeil 7), in welchem sich der Schlamm vom Wasser absetzt. Das Wasser wird aus dem Nachklärbecken 4 abgeführt und in den in der Figur nicht weiter dargestellten Vorfluter geleitet (Pfeil 8). Der Schlamm wird teilweise als Rückführschlamm in das Belüftungsbecken 3 zurückgeführt (Pfeil 9) und teilweise als Überschussschlamm einer als Hydrozyklon 10 ausgebildeten Separierungsvorrichtung zugeführt (Pfeil 11). In dem Hydrozyklon 10 wird der im Belüftungsbecken 3 entstandene Überschussschlamm in eine schwere Schlammphase, welche mehrheitlich die anaerob Ammonium oxidierenden Bakterien enthält (ANAMMOX), und in eine leichte Schlammphase separiert, wobei die schwere Schlammphase in das Belüftungsbecken 3 zurückgeführt wird (Pfeil 12). Die leichte Schlammphase wird als Überschussschlamm der Schlammfaulung bzw. einem Faulbehälter 13 zugeführt (Pfeil 14), wobei in den Faulbehälter 13 auch der dem Abwasser im Vorklärbecken 2 entzogene Schlamm eingeleitet wird (Pfeil 15).

Der Schlamm wird in dem Faulbehälter 13 und/oder während des Transports zum Faulbehälter 12 auf eine Temperatur von etwa 35 bis 40 °C aufgeheizt. Während der Schlammfaulung im Faulbehälter 13 werden die organischen Inhaltsstoffe des Überschussschlamms aus dem Nachklärbecken 4 und des dem Abwasser im Vorklärbecken 2 entzogenen Schlamms in Gas (Methan) umgewandelt. Der enthaltene Stickstoff verbleibt im Schlamm, welcher jetzt in einer hohen Konzentration von typischerweise 500 bis 2000 mg/l vorliegt. Dieser hoch stickstoffhaltige Schlamm wird nach der Schlammfaulung im Faulbehälter 13 einer Schlammentwässerungseinrichtung 16, beispielsweise einer Zentrifuge, zugeführt (Pfeil 17) und entwässert. Die wässrige Phase enthält nach der Schlammentwässerung den Stickstoff und weist eine Temperatur von etwa 25 bis 39 °C auf. Das warme, hoch stickstoffhaltige Schlammwasser wird im Anschluss einem deammonifizierenden Becken 18 zugeführt (Pfeil 19), während der vom Schlammwasser abgetrennte Schlamm entsorgt wird (Pfeil 20).

In dem deammonifizierenden Becken 18 werden die im Schlammwasser enthaltenen Stickstoffverbindungen (NH₄, organischer Stickstoff) durch Deammonifikation in elementaren Stickstoff (N₂) umgewandelt, welcher in die Umgebungsluft ausgast. Der bei der Deammonifikation entstehende Überschussschlamm wird anschließend in das Belüftungsbecken 3 geleitet (Pfeil 21). Da das gereinigte Schlammwasser auch nach der Deammonifikation noch Rückstände von Ammonium und Nitrit enthält, wird auch das Schlammwasser aus dem deammonifizierenden Becken 18 dem Belüftungsbecken 3 zugeführt (Pfeil 22).

## Patentansprüche

1. Verfahren zur biologischen Reinigung von ammoniumhaltigem, insbesondere zwischen 7 und 25 °C kaltem, Abwasser in einem Belüftungsbecken (3), in welchem das in dem Abwasser enthaltene Ammonium (NH₄) bei einer vorgegebenen Sauerstoffkonzentration zu elementarem Stickstoff (N₂) umgesetzt wird und ein bei der Umsetzung entstehender Überschussschlamm zumindest teilweise einer Schlammfaulung zugeführt wird, während welcher die organischen Inhaltsstoffe des Schlamms zu Gas umgewandelt werden, wobei der Schlamm anschließend einer Schlammentwässerung zugeführt wird und das vom Schlamm abgetrennte hoch stickstoffhaltige und warme Schlammwasser, welches insbesondere eine Stickstoffkonzentration von 500 bis 2000 mg/l und eine Temperatur von etwa 25 bis 39 °C aufweist, anschließend einem deammonifizierenden Becken (18) zugeführt wird, in welchem die im Schlammwasser enthaltenen Stickstoffverbindungen (NH₄, organischer Stickstoff) durch Deammonifikation in elementaren Stickstoff (N₂) umgewandelt werden, **dadurch gekennzeichnet, dass** ein bei der Deammonifikation des Schlammwassers entstehender Überschussschlamm dem Belüftungsbecken (3) zugeführt wird und im Belüftungsbecken (3) eine niedrige Sauerstoffkonzentration von kleiner als 1,0 mg/l eingestellt wird, sodass das im Abwasser enthaltene Ammonium (NH₄) zunächst mittels aerob oxidierender Bakterien (AOB) zu Nitrit (NO₂) umgesetzt wird und anschließend mittels anaerob oxidierender Bakterien (ANAMMOX), insbesondere Planctomyceten. Ammonium (NH₄) und Nitrit (NO₂) in elementaren Stickstoff (N₂) umgesetzt werden, wobei der bei dieser Deammonifikation im Belüftungsbecken (3) entstehende Überschussschlamm vor der Zuführung zur Schlammfaulung in eine schwere Schlammphase, welche mehrheitlich die anaerob Ammonium (NH₄) oxidierenden Bakterien (ANAMMOX) enthält, und eine leichte Schlammphase separiert wird, wobei die schwere Schlammphase in das Belüftungsbecken (3) zurückgeführt und die leichte Schlammphase als Überschussschlamm der Schlammfaulung zugeführt wird.

2. Verfahren nach Anspruch 1, **dadurch gekennzeichnet, dass** das in dem deammonifizierenden Becken (18) durch Deammonifikation gereinigte Schlammwasser nach dem Abtrennen vom Schlamm dem Belüftungsbecken (3) zugeführt wird.

3. Verfahren nach den Ansprüchen 1 oder 2, **dadurch gekennzeichnet, dass** der bei der Deammonifikation in dem deammonifizierenden Becken (18) entstehende Überschussschlamm und das gereinigte Schlammwasser als Suspension dem Belüftungsbecken (3) zugeführt werden.

4. Verfahren nach zumindest einem der vorangehenden Ansprüche, **dadurch gekennzeichnet, dass** das Abwasser nach der Deammonifikation im Belüftungsbecken (3) einem Nachklärbecken (4) zugeführt wird, wobei der sich im Nachklärbecken (4) absetzende Schlamm teilweise als Rückführschlamm in das Belüftungsbecken (3) zurückgeführt und teilweise als Überschussschlamm der Schlammfaulung zugeführt wird.

5. Verfahren nach zumindest einem der vorhergehenden Ansprüche **dadurch gekennzeichnet, dass** das Abwasser vor dem Einleiten in das Belüftungsbecken (3) in einem Vorklärbecken (2) gereinigt wird und ein Vorklärschlamm zusammen mit dem Überschussschlamm aus dem Belüftungsbecken (3) oder dem Nachklärbecken (4) der Schlammfaulung zugeführt wird.

6. Verfahren nach zumindest einem der vorhergehenden Ansprüche, **dadurch gekennzeichnet, dass** das Separieren des aus der Deammonifikation des Abwassers in dem Belüftungsbecken (3) resultierenden Überschussschlamms in eine schwere Schlammphase und eine leichte Schlammphase in einem Hydrozyklon (10) durchgeführt wird.

7. Verfahren nach zumindest einem der vorhergehenden Ansprüche, **dadurch gekennzeichnet, dass** das Separieren des aus der Deammonifikation des Abwassers in dem Belüftungsbecken (3) resultierenden Überschussschlamms in eine schwere Schlammphase und eine leichte Schlammphase in einer Zentrifuge durchgeführt wird.

8. Verfahren nach zumindest einem der vorhergehenden Ansprüche, **dadurch gekennzeichnet, dass** das Separieren des aus der Deammonifikation des Abwassers in dem Belüftungsbecken (3) resultierenden Überschussschlamms in eine schwere Schlammphase und eine leichte Schlammphase durch Sedimentation erfolgt.

## Claims

1. Method for the biological purification of ammonium-containing wastewater, in particular cold wastewater between 7 and 25°C, in an aeration tank (3) in which the ammonium (NH₄) contained in the wastewater is reacted at a predetermined oxygen concentration to form elemental nitrogen (N₂) and a surplus sludge formed in the reaction is fed at least in part to a sludge digestion, during which the organic constituents of the sludge are converted to gas, wherein the sludge is then fed to a sludge dewatering and the high-nitrogen and warm sludge water that is separated off from the sludge and which has, in particular, a nitrogen concentration from 500 to 2000 mg/l and a temperature of about 25 to 39°C is then fed to a deammonifying tank (18), in which the nitrogen compounds (NH₄, organic nitrogen) contained in the sludge water are converted by deammonification to elemental nitrogen (N₂), **characterized in that** a surplus sludge formed in the deammonification of the sludge water is fed to the aeration tank (3) and a low oxygen concentration of less than 1.0 mg/l is set in the aeration tank (3) in such a manner that the ammonium (NH₄) present in the wastewater is first converted using aerobically oxidizing bacteria (AOB) to nitrite (NO₂) and then, using anaerobically oxidizing bacteria (ANAMMOX), in particular Planctomycetes, ammonium (NH₄) and nitrite (NO₂) are converted to elemental nitrogen (N₂), wherein the surplus sludge formed in this deammonification in the aeration tank (3), before the feed to the sludge digestion, is separated into a heavy sludge phase which contains mainly the anaerobically ammonium (NH₄)-oxidizing bacteria (ANAMMOX), and a light sludge phase, wherein the heavy sludge phase is returned to the aeration tank (3) and the light sludge phase is fed as surplus sludge to the sludge digestion.

2. Method according to Claim 1, **characterized in that** the sludge water purified by deammonification in the deammonifying tank (18), after it is separated off from the sludge, is fed to the aeration tank (3).

3. Method according to Claim 1 or 2, **characterized in that** the surplus sludge formed in the deammonification in the deammonifying tank (18) and the purified sludge water are fed as suspension to the aeration tank (3).

4. Method according to at least one of the preceding claims, **characterized in that** the wastewater is fed to a secondary clarifier (4) after the deammonification in the aeration tank (3), wherein the sludge settling in the secondary clarifier (4) is returned in part as return sludge to the aeration tank (3) and is fed in part as surplus sludge to the sludge digestion.

5. Method according to at least one of the preceding claims, **characterized in that** the wastewater is purified in a primary clarifier (2) before introduction into the aeration tank (3) and a primary sludge is fed to the sludge digestion together with the surplus sludge from the aeration tank (3) or the secondary clarifier (4).

6. Method according to at least one of the preceding claims, **characterized in that** the surplus sludge resulting from the deammonification of the wastewater in the aeration tank (3) is separated into a heavy sludge phase and a light sludge phase in a hydrocyclone (10).

7. Method according to at least one of the preceding claims, **characterized in that** the surplus sludge resulting from the deammonification of the wastewater in the aeration tank (3) is separated into a heavy sludge phase and a light sludge phase in a centrifuge.

8. Method according to at least one of the preceding claims, **characterized in that** the surplus sludge resulting from the deammonification of the wastewater in the aeration tank (3) is separated into a heavy sludge phase and a light sludge phase by sedimentation.

## Revendications

1. Procédé de purification biologique d'eaux usées contenant de l'ammonium, notamment froides à une température comprise entre 7 et 25 °C, dans un bassin d'aération (3), selon lequel l'ammonium (NH₄) contenu dans les eaux usées est transformé en azote élémentaire (N₂) à une concentration en oxygène donnée et une boue excédentaire formée lors de la réaction est introduite au moins en partie dans une digestion des boues, pendant laquelle le contenu organique de la boue est transformé en gaz, la boue étant ensuite introduite dans une déshydratation des boues et l'eau boueuse chaude et à teneur élevée en azote séparée de la boue, qui présente notamment une concentration en azote de 500 à 2 000 mg/l et une température d'environ 25 à 39 °C, étant ensuite introduite dans un bassin de désammonification (18), dans lequel les composés azotés (NH₄, azote organique) contenus dans l'eau boueuse sont transformés en azote élémentaire (N₂) par désammonification, **caractérisé en ce qu'**une boue excédentaire formée lors de la désammonification de l'eau boueuse est introduite dans le bassin d'aération (3) et, dans le bassin d'aération (3), une faible concentration en oxygène inférieure à 1,0 mg/l est ajustée, de manière à ce que l'ammonium (NH₄) contenu dans les eaux usées soit tout d'abord transformé en nitrite (NO₂) par des bactéries oxydantes par voie aérobie (AOB), et à ce que l'ammonium (NH₄) et le nitrite (NO₂) soient ensuite transformés en azote élémentaire (N₂) par des bactéries oxydantes par voie anaérobie (ANAMMOX), notamment des planctomycètes, la boue excédentaire formée lors de cette désammonification dans le bassin d'aération (3) étant séparée avant l'introduction dans la digestion des boues en une phase boueuse lourde, qui contient majoritairement les bactéries oxydant l'ammonium (NH₄) par voie anaérobie (ANAMMOX), et une phase boueuse légère, la phase boueuse lourde étant recyclée dans le bassin d'aération (3) et la phase boueuse légère étant introduite dans la digestion des boues en tant que boue excédentaire.

2. Procédé selon la revendication 1, **caractérisé en ce que** l'eau boueuse purifiée dans le bassin de désammonification (18) par désammonification est introduite dans le bassin d'aération (3) après la séparation de la boue.

3. Procédé selon la revendication 1 ou 2, **caractérisé en ce que** la boue excédentaire formée lors de la désammonification dans le bassin de désammonification (18) et l'eau boueuse purifiée sont introduites dans le bassin d'aération (3) sous la forme d'une suspension.

4. Procédé selon au moins l'une quelconque des revendications précédentes, **caractérisé en ce que** les eaux usées sont introduites dans un clarificateur secondaire (4) après la désammonification dans le bassin d'aération (3), la boue qui sédimente dans le clarificateur secondaire (4) étant partiellement recyclée en tant que boue recyclée dans le bassin d'aération (3) et partiellement introduite dans la digestion des boues en tant que boue excédentaire.

5. Procédé selon au moins l'une quelconque des revendications précédentes, **caractérisé en ce que** les eaux usées sont purifiées dans un clarificateur primaire (2) avant l'introduction dans le bassin d'aération (3) et une boue de clarification primaire est introduite conjointement avec la boue excédentaire issue du bassin d'aération (3) ou du clarificateur secondaire (4) dans la digestion des boues.

6. Procédé selon au moins l'une quelconque des revendications précédentes, **caractérisé en ce que** la séparation de la boue excédentaire résultant de la désammonification des eaux usées dans le bassin d'aération (3) en une phase boueuse lourde et une phase boueuse légère est réalisée dans un hydrocyclone (10).

7. Procédé selon au moins l'une quelconque des revendications précédentes, **caractérisé en ce que** la séparation de la boue excédentaire résultant de la désammonification des eaux usées dans le bassin d'aération (3) en une phase boueuse lourde et une phase boueuse légère est réalisée dans une centrifugeuse.

8. Procédé selon au moins l'une quelconque des revendications précédentes, **caractérisé en ce que** la séparation de la boue excédentaire résultant de la désammonification des eaux usées dans le bassin d'aération (3) en une phase boueuse lourde et une phase boueuse légère a lieu par sédimentation.
